# EUROPÄISCHE PATENTSCHRIFT

(11) **EP 2 076 935 B1**
(45) Veröffentlichungstag und Bekanntmachung des Hinweises auf die Patenterteilung: **19.05.2010**
(21) Anmeldenummer: 07821249.5
(22) Anmeldetag: 12.10.2007
(51) Int. Cl.: H01M 8/24, H01M 8/04

(54) **TRAGBEHÄLTER EINER ENERGIEVERSORGUNGSEINHEIT MIT BRENNSTOFFZELLEN**
CARRYING CONTAINER FOR A POWER SUPPLY UNIT WITH FUEL CELLS
RÉCIPIENT PORTEUR POUR UNITÉ D'ALIMENTATION EN ÉNERGIE DOTÉ DE CELLULES À COMBUSTIBLE

(30) Priorität: 13.10.2006 DE 102006049031
(43) Veröffentlichungstag der Anmeldung: 08.07.2009
(73) Patentinhaber: FutureE Fuel Cell Solutions GmbH, 72622 Nürtingen (DE)
(72) Erfinder: KATTNER, Ulrich, 89073 Ulm (DE); LIMMER, Siegfried, 72622 Nürtingen (DE)
(74) Vertreter: Cremer & Cremer
(86) Internationale Anmeldenummer: PCT/EP2007/060882
(87) Internationale Veröffentlichungsnummer: WO 2008/043838

(56) Entgegenhaltungen:
- EP-A- 0 546 211
- EP-A- 1 339 120
- WO-A-94/02966
- US-A1- 2003 070 850
- US-A1- 2005 095 500
- US-A1- 2005 211 436

## Beschreibung

Die vorliegende Erfindung betrifft einen Tragbehälter für eine Energieversorgungseinheit, die wenigstens einen Teil ihrer Energie aus einem Brennstoffzellenstapel, insbesondere einem Brennstoffzellstapel mit Polymerelektrolytmembranbrennstoffzellen, bezieht. Daneben beschreibt die Erfindung eine geeignete Verwendung eines erfindungsgemäßen Tragbehälters, sowie die Nutzung des Tragbehälters zur Gefährdungsreduzierung erfindungsgemäßer Energieversorgungseinheiten.

Es gibt verschiedene Ausführungsformen und Typen von Brennstoffzellen. Eine weit verbreitete Brennstoffzellenart ist die Polymerelektrolytmembranbrennstoffzelle, die mit einem Elektrolyten in Form einer Polymermembran die Umwandlung der Reaktanden, insbesondere Wasserstoff und Sauerstoff, in einer Schicht, die benachbart zur Membran gegeben ist, durchführt. Dabei entsteht unter anderem elektrische Leistung. Andere Brennstoffzellentypen, insbesondere im Niedertemperaturbereich bis ca. 200 °C oder 250 °C, insbesondere mit einem örtlich festen oder fixierten Elektrolyten, sind ebenfalls bekannt. Die Brennstoffzellenstapel werden mit weiteren Periphenekomponenten, wie Ventilen, Sensoren, Steuerungseinheiten, Reaktandenspeichervolumina, Gebläsen und elektrischer Energiespeicher (Stützbatterien, Ultrakapazität) zu Energieversorgungseinheiten zusammengebaut. Die kompakten Energieversorgungseinheiten, das sind solche Energieversorgungseinheiten, die 10 kW Leistung, insbesondere weniger als 5 kW Leistung, liefern können, lassen sich besonders gut mit Polymerelektrolytmembranbrennstoffzellen aufbauen. Die kompakten Energieversorgungseinheiten können häufig noch als tragbare Einheiten im Freizeitbereich, wie zum Beispiel im Motorbootssportbereich, oder auch im sicherheitskritischen Bereich, wie zum Beispiel als Notstromversorgungseinheiten, an die Orte mitgeführt werden, an denen insbesondere eine elektrische Leistung sichergestellt werden muss. Häufig können kompakte Einheiten also so gestaltet werden, dass sie von einer Person zu tragen sind. Eine weitere Anwendung erfindungsgemäßer Brennstoffzelleneinheiten besteht darin, als Bootsantrieb oder Bootshilfsantrieb an einem festen Ort installiert zu werden. Auch Notstromeinheiten werden dann häufig an einem festen Ort platziert.

Die Polymerelektrolytmembranbrennstoffzelle arbeitet nach einer Ausgestaltung direkt mit Wasserstoff. Im Bewusstsein vieler Nutzer birgt Wasserstoff ein Sicherheitsrisiko. Insbesondere mit dem Sauerstoff aus der Luft kann sich ein zündfähiges Knallgasgemisch bilden. Um einer Gefährdung eines Benutzers vorzugreifen, sind kompakte Energieversorgungseinheiten bekannt, die mit wenigstens einem Wasserstoffsensor, häufig sogar mehreren Wasserstoffsensoren, ausgestattet sind, um ausgetretenen Wasserstoff rechtzeitig zu detektieren und Gegenmaßnahmen einleiten zu können. In solchen Einheiten werden die einzelnen Komponenten, die die kompakte Energieversorgungseinheit ergeben, an einem Rahmen montiert. Ein besonderes Wissen liegt in der Identifizierung von geeigneten Stellen, an denen Wasserstoffsensoren zu platzieren sind. Nach dem Aufbau sind Beweise gegenüber einschlägigen Überwachungsvereinen zu erbringen, dass die Energieversorgungseinheit zuverlässig und sicher ist.

In der Figur 9 der EP 1 339 120 A2 ist ein Gehäuse mit einer zwischen den einzelnen Zellen beabstandeten Brennstoffzelle dargestellt, die ausgangsseitig einen Ventilator zur Luftförderung hat. Das Gehäuse bietet einen Hohlraum, der teilweise durch die Brennstoffzelle gefüllt ist und im Übrigen für die Durchströmung der Umgebungsluft bestimmt ist.

In den Abbildungen 8, 10 und 11 der EP 0 649 570 B1 sind Abstandshalter und Leisten eingezeichnet, die aus wärmeleitenden Kunststoffen gefertigt sein können. Die Abstandshalter und Leisten sind zwischen den einzelnen Lagen der Zellen eines mehrzelligen elektrochemischen Energiewandlers einzulegen, um somit einen Stapel zu schaffen.

Aus der US 2005 095 500 A1 ist zu entnehmen, dass - wie zuvor schon dargelegt- einzelne Brennstoffzellenkomponenten in einem Gehäuse angeordnet werden können. Sich bildende Hohlräume können durch metallisches Auffüllmaterial verstopft werden. Zusätzlich lassen sich Isolationskissen zur Dämpfung an dem Gehäuse anbringen. Die US 2003 070 850 A1 verkündet eine ähnliche Idee, indem diese von großflächigem Dämpfungsmaterial zur Aufnahme von Vibrationen spricht, das als einzelne Lage auch aus Schäumen oder aus Elastomeren gefertigt sein kann. Die Schäume können US 2005 211 436 A1 zufolge auch zur Wärmedämmung ausgewählter Bauteile wie zum Beispiel einer zusätzlichen Wärmequelle in einer Energieversorgungseinheit verwendet werden. Allgemein kann zusammengefasst werden, dass aus Vibrationsüberlegungen, aus Wärmedämmungsüberlegungen und aus Stabilitätsüberlegungen lageweise, kissenweise oder hohlraumweise eine Energieversorgungseinheit mit zusätzlichen Materialien wie irgendeinem Schaum ausgestattet werden kann.

Es ist also der Wunsch nach einem Tragbehälter gegeben, der sowohl die Montage der einzelnen Komponenten der Energieversorgungseinheit vereinfacht, als auch das Erbringen eines Sicherheitsnachweises ohne zusätzliche umfassende Beweise durch wenige Überprüfungen beibringen lässt.

Eine Beschreibung zur Schaffung einer Verpackungseinheit für einzelne Komponenten eines Computers ist die Patentfamilie unter anderem mit den folgenden Familienmitgliedern bekannt: DE 691 03 014, EP 546 211 B2, JP 2003 05 16 84 A. In dieser Patentfamilie wird vorgeschlagen, einen expandierten Kunststoff als Haltematerial für einzelne Komponenten eines Computers, wie zum Beispiel der Festplatte, zu benutzen.

Mit Kenntnis der dort offenbarten Lehre kann der Ansatz erfindungsgemäß weiterentwickelt werden, um einen Tragbehälter für eine kompakte Energieversorgungseinheit zu schaffen.

Die Aufgabe wird erfindungsgemäß durch einen Tragbehälter nach Anspruch 1 gelöst. Aus Anspruch 12 ist eine geeignete Verwendung für einen erfindungsgemäßen Tragbehälter zu entnehmen. Die Nutzung des Tragbehälters zur Gefährdungsreduzierung kann dem Anspruch 13 entnommen werden. Vorteilhafte Weiterbildungen sind den abhängigen Ansprüchen zu entnehmen.

Der Tragbehälter besteht aus einzelnen Komponenten. Der Tragbehälter weist Aussparungen auf. In den Aussparungen können einzelne Komponenten der Energieversorgungseinheit platziert werden. Die einzelnen Komponenten der Energieversorgungseinheit können in den Tragbehälteraussparungen ohne weitere Befestigungsmaßnahmen, zum Beispiel im Klemmsitz, liegen. Der Tragbehälter ist aus den einzelnen Schichten seiner Komponenten aufgebaut. Als geeignetes Material des Tragbehälters hat sich ein expandierter Kunststoff erwiesen. Ein solcher expandierter Kunststoff kann Polypropylen, Polyurethan oder Polyethylen sein. Die Komponenten der Energieversorgungseinheit stehen untereinander in Verbindung, zum Beispiel über Kabel, Verrohrungen etc. Der Tragbehälter füllt den größten Raum der Energieversorgungseinheit aus. Die Komponenten der Energieversorgungseinheit zusammen mit den Schichten des Tragbehälters bilden eine kompakte Einheit. Die kompakte Einheit wirkt wie ein Würfel. Die Energieversorgungseinheit ist eine längliche, quaderförmige Einheit, deren wesentliches formgebendes Mittel der Tragbehälter ist. Andere geeignete Formeln sind ebenfalls vorstellbar.

Expandierter Kunststoff ist als Isolationsmaterial oder als Schaumstoff bekannt. Expandierter Kunststoff hat eine niedrige Dichte und einen niedrigen Wärmeleitfaktor. Der expandierte Kunststoff ist ein aufgeschäumter Kunststoff. Der aufgeschäumte Kunststoff hat Einschlüsse und Hohlräume. Die Einschlüsse können kleine Lufteinschlüsse sein. Die Einschlüsse können kugelförmig oder zapfenförmig sein. Expandierter Kunststoff ist ein leichtes, nachgiebiges, isolierendes Material, das nicht als wärmeleitfähiges Material eingesetzt werden kann.

In dem Tragbehälter ist wenigstens ein Kanal vorgesehen. Der Kanal dient als Reaktandenführungskanal. Durch den Reaktandenführungskanal kann wenigstens ein Reaktand der Brennstoffzelle bzw. des Brennstoffzellenstapels zu der Brennstoffzelle hin und von der Brennstoffzelle weg, insbesondere als Produkt, geleitet werden. Das Produkt kann in einem abgereicherten Eduktenstrom ausgebracht werden.

Der Tragbehälter aus expandiertem Kunststoff füllt den größten Teil des Raums aus, so dass nur kleinste Totraumbereiche übrig bleiben, in denen sich brennbare oder explosive Gemische auf Wasserstoffbasis bilden können. An einer bewusst ausgewählten Stelle hat der Tragbehälter eine solche Aussparung, dass diese als Kanal zu nutzen ist. Der Kanal führt den Reaktanden, wie sauerstoffhaltige Luft, die zum Beispiel beschleunigt oder auch unter Überdruck stehen kann, oder auch Wasserstoff. Der Tragbehälter erfüllt mehrere Aufgaben gleichzeitig. Er dient als Hülle, als Außenbegrenzung, eines Kanals. Gleichzeitig dient er als Fixierungsmittel für die diversen Komponenten der Energieversorgungseinheit. Weiterhin dient er als Füllmittel von Todträumen, so dass sich dort kein Wasserstoff unkontrolliert ansammeln kann. Zwar können immer noch minimale Mengen Wasserstoff durch den expandierten Kunststoff des Tragbehälters durchdiffundieren, aber kritische Grenzwerte werden in dem Material des Tragbehälters nicht überschritten. Weiterhin befinden sich im oberen Teil des Tragbehälters, durch wo der Wasserstoff entgegen der Schwerkraft hindiffundiert, keine Zündquellen. Der Tragbehälter umschließt formschlüssig den einzusetzenden Brennstoffzellenstapel in abdichtender Weise, so dass sich keine Fehlluftströme um den Brenstoffzellenstapel ausbilden können.

Die Brennstoffzellen des Brennstoffzellenstapels arbeiten nach einer Ausgestaltung mit Umgebungsluft, sie nutzen dabei den Sauerstoff in der Umgebungsluft. Brennstoffzellen arbeiten gerne überstoichiometrisch, so dass ein Beschleunigungsmittel, wie ein Ventilator oder ein Gebläse, den Reaktanden, insbesondere mit einem leichten Überdruck von einigen 100 mbar, in die Kathoden des Brennstoffzellenstapels einströmen. Der Brennstoffzellenstapel steht quer zur Reaktandenführungskanalrichtung. Durch die geschickte Anordnung können alle Brennstoffzellen des Brennstoffzellenstapels parallel angeströmt werden. Damit die Brennstoffzellen in den Randbereichen ebenfalls mit nahezu der gleichen Menge Luft versorgt werden können, sind in dem Reaktandenführungskanal Gleichverteilungsmittel in Form von Stegen vorgesehen. Die Stege sind ebenfalls aus dem expandierten Kunststoff hergestellt. Die entsprechende Schicht des Tragbehälters, der die Unterseite des Kanals bildet, und verschiedene Gleichverteilungsmittel sind einstückig aus dem Kunststoff ausgeformt. Ebenfalls können aus der nach unten weisenden Oberseite des Kanals weitere Gleichverteilungsmittel, vorzugsweise ebenfalls einstückig, herausragen.

Geschickterweise wird der Brennstoffzellenstapel so angeordnet, dass die Zellspannungen gleichmäßig über den Stapel aufgebaut sind und so die Potentialunterschiede an der Kathode reduziert sind. Nach einer Ausgestaltung wird der Stapel entlang des Kanals in dem Kanal platziert, aus Platzgründen ist aber eine Anordnung in Querrichtung auch geeignet.

Der Kanal, der den einen Reaktanden führt, soll so aufgeweitet sein, dass er an alle Kathoden der einzelnen Brennstoffzellen heranreichen kann. Wenn der Brennstoffzellenstapel sich nahezu über die gesamte Breite des Tragbehälters erstreckt, kann nach einer Ausgestaltung ein anfänglich schmaler Kanal vom Randbereich des Tragbehälters aus aufweitend zur Mitte des Tragbehälters hin nahezu die gesamte Breite des Tragbehälters einnehmen. Nur an den Rändern sind Wände mit einer solchen Wandstärke vorgesehen, dass das formstabile Material des Tragbehälters alle Komponenten sicher abstützen kann. Der expandierte Kunststoff kann durch eine äußere Hülle, die den gesamten Tragbehälter überdeckt, verstärkt und abgestützt werden. Der Zuströmkanal für die Reaktandenführung sieht bei einem solchen Ausgestaltungsbeispiel wie ein Fächer aus, dessen einzelne Blätter durch die einteilig ausgeformten Gleichverteilungsmittel ausgestaltet sind.

In dem Tragbehälter werden die einzelnen Komponenten so angeordnet, dass die zuströmende Luft in verschiedener Hinsicht genutzt werden kann. Sollte Wasserstoff aus einem der wasserstoffführenden Komponenten, wie einem Wasserstoffminderungsventil, einem Wasserstoffisolationsventil oder einer Wasserstoffrohrleitung, ausströmen, so nimmt das Medium in dem Kanal den ausströmenden Wasserstoff konzentrationsmäßig reduziert mit. Polymerelektrolytenmembranbrennstoffzellen arbeiten vorzüglich in einem Temperaturbereich, der oberhalb normaler Umgebungstemperaturen liegt, zum Beispiel 65 °C bis 130 °C. Die Umgebungsluft ist daher kühler. Insbesondere im Winter kann die Luft so kalt sein, dass der Brennstoffzellenbetrieb nicht mehr optimal ist. Die Führung des Reaktanden durch den Tragbehälter, der eine gewisse Wärmespeicherkapazität aufweist, sorgt für eine Erwärmung der Zustromluft. Gleichzeitig kann die zuströmende Luft als Kühlungsmittel für abwärmeproduzierende Bauteile genutzt werden. Bei einer Ausgestaltung werden einzelne Komponenten fest eingebettet in der entsprechenden Schicht des Tragbehälters unterhalb des Kanals platziert. Der leichtere Wasserstoff steigt entgegen der Gravitation auf und diffundiert so in den Reaktandenführungskanal. Der unter leichtem Überdruck stehende, zum Beispiel 500 mbar Überdruck, Zustrom an die Kathode der Brennstoffzelle verringert die Konzentration des austretenden Wasserstoffs.

Nach einem weiteren Aspekt kann der Reaktandenkanal, vorzugsweise der Luftkanal, dazu genutzt werden, gepurgten Wasserstoff vor dem Brennstoffzellenstapel in den Luftkanal einzulassen, um mit der offenen Kathode des Brennstoffzellenstapels die Konzentration weiter zu reduzieren.

Auf der anderen Seite der jeweiligen Brennstoffzelle, also dem gesamten Brennstoffzellenstapel, wird über den zweiten Teil des Kanals die nicht verbrauchten Reaktanden und die entstehenden Produkte, insbesondere Wasser in gasförmiger Form, ausgetragen. Der durch den Tragbehälter hindurchführende Kanal, aus zwei Abschnitten bestehend, ist Ungefähr mittig durch eine größere Aussparung unterbrochen, die für den Brennstoffzellenstapel vorgesehen ist. Die weiteren für den Betrieb der Energieversorgungseinheit notwendigen Komponenten können unterhalb einer der beiden Kanalabschnitte angeordnet werden. Die Anordnung der einzelnen Komponenten ist so gewählt, dass keine Zündenergie aus den elektrischen Leitungen in eine Mischung der Reaktanden gelangen kann. Komponenten, die zum Beispiel einen größeren Stromfluss im Betrieb erfordern, wie zum Beispiel Schaltventile, werden im unteren, ausgangsseitigen Bereich des Tragbehälters platziert, während Komponenten mit weniger elektrischer Energie, wie zum Beispiel Sensoren, im eingangsseitigen unteren Bereich des Tragbehälters unterhalb des Zustromkanalabschnittes platziert werden. Natürlich können Sensoren nur insoweit in ihrer Anordnung örtlich verschoben werden, wie sie auf Grund ihrer Funktion zu verändern sind und trotzdem noch die Funktion erfüllen.

Nach einer weiteren günstigen Ausgestaltung wird ein solcher expandierter Kunststoff gewählt, der bei der formgebenden Schäumung in geschlossenen Oberflächenzellen ausmündet. Die Oberflächenstruktur auf der Innenseite des Kanals, die eine geschlossene Oberfläche, vorzugsweise ohne Vertiefungen, Löcher oder Eindellungen, ist, sorgt für eine Verringerung des Druckabfalls beim Zu- und Abströmen der Reaktanden bzw. der Edukte. Versuche haben gezeigt, dass solche Kanäle mit geringeren Druckabfällen als 0,25 bar aufgebaut werden können. Vorzugsweise ist der gesamte Druckabfall hinter einem Ventilator bis zur Ausströmöffnung inklusive einem geeigneten Brennstoffzellenstapel insgesamt kleiner als 0,3 bar bzw. 0,25 bar. Vorzugsweise wird mit kleinsten Druckabfällen gearbeitet, z. B. einem Wert weniger als 20 mbar wie 10 mbar.

Der zweigeteilte Kanal ist eingangsseitig mehrfach aufgefächert, um an die Kathoden der einzelnen Brennstoffzellen des Brennstoffzellenstapels heranzuführen. Der an die Brennstoffzelle herangeführte Reaktand kühlt die Komponenten, die er überstreicht. Dabei erwärmt sich der Reaktand. Der expandierte Kunststoff ist im Betriebsbereich der Energieversorgungseinheit, zum Beispiel von -20 °C bis +130 °C, formstabil. Der expandierte Kunststoff hat eine Wärmespeicherkapazität. Durch den expandierten Kunststoff kann Wasserstoff diffundieren, er reduziert aber die Wanderungsgeschwindigkeit des Wasserstoffs.

Der Tragbehälter wird in einzelnen Schichten geschäumt. Die einzelnen Schichten weisen Stufen auf. In eine Schicht des Tragbehälters können einzelne Komponenten fixierenderweise eingelegt werden. Wenn der Tragbehälter mit allen Komponenten bestückt ist, inklusive der entsprechenden Verkabelung zwischen den Komponenten, können die Schichten so aufeinandergelegt werden, dass die einzelnen Stufen miteinander in Eingriff, vorzugsweise verhakt, gelangen. Zu jeder Stufe gibt es also bei der nächsten Schicht die korrespondierende spiegelbildliche Gegenstufe. Nach einer Ausgestaltung sind in dem Tragbehälter wenigstens zwei verschiedene Lagen zu identifizieren. Nach einer weiteren Ausgestaltung sind in dem Tragbehälter wenigstens drei verschiedene Lagen zu identifizieren. Der Tragbehälter selbst besteht bei dieser Ausgestaltung aber nur aus zwei Teilen. Nach einer anderen Ausgestaltung kann der Tragbehälter auch aus drei oder mehr Schichten bestehen. Die Schichten werden so übereinander gelegt, dass sie sowohl in waagerechter als auch in senkrechter Ebene, insbesondere abschnittsweise, mit ihrer benachbarten, nächsten Schicht in Anlage kommen.

Ein abströmseitiges Gebläse lässt sich - strömungstechnisch gesehen - hinter dem Brennstoffzellenstapel anordnen. Das Gebläse kann in saugender Weise die Luft, den Reaktanden, aus den Kathoden des Brennstoffzellenstapels heraussagen und hierbei die Produkte, wie Wasser, mitnehmen.

Als besonderes Sicherheitsmerkmal kann ein Wasserstoffsensor, ein Sensor, der die Wasserstoftkonzentration messen soll, hinter dem Brennstoffzellenstapel und vor dem Gebläse angeordnet werden. Dies ist der Ort, an dem bei einer Membranschädigung einer Brennstoffzelle die höchste Konzentration gemessen wird. Der Wasserstoffsensor sitzt im mit Produkten angereicherten Abluftstrom. Nach einer alternativen Ausgestaltung ist der Wasserstoffsensor hinter dem Gebläse anzuordnen. Das ist die Stelle, an der eine gute Durchmischung gewährleistet ist. Dadurch ist die relative Höhenlage im Gehäuse nachrangig.

Wenn der Tragbehälter mit allen Komponenten des Brennstoffzellensystems versehen worden ist, kann der Tragbehälter in seine äußere Umhüllung geschoben bzw. eingelegt (wie zum Beispiel als Einheit für einen "rackmount") werden. Die sich daraus ergebende kompakte Einheit kann die Form eines standardisierten Gehäuses, wie zum Beispiel eines 19"-Systems, aufweisen, so dass der Tragbehälter im Motorsportsbereich wie dem Sportbootsbereich, oder dem Notstromaggregatebereich eingesetzt werden kann. Erfindungsgemäße Energieversorgungseinheiten sind bei dieser Ausgestaltung leicht zu stapeln, sie können bei Bedarf aus einem zentralen Lager, in dem die Energieversorgungseinheiten bis unter die Decke gestapelt werden können, ausgefasst werden bzw. dort können Sie gut gestapelt werden.

Die Form des Tragbehälters verkörpert ein besonderes Verfahren, das dazu dient, die Gefährdung für Nutzer von Energieversorgungseinheiten auf Wasserstoffbasis zu reduzieren. Der expandierte Kunststoff des Tragbehälters füllt nicht genutzte Bereiche innerhalb seines Volumens so aus, dass er gleichzeitig die einzelnen Komponenten des Brennstoffzellensystems gegen äußere Einwirkungen formstabil, temperaturstabil, elastisch nachgiebig schützt. Die Versorgungsluft für den Brennstoffzellenstapel wird durch einen Kanal, der sich als Aussparung in dem Tragbehälter bildet, zu und von der jeweiligen Brennstoffzelle geführt. Austretender Wasserstoff kann nur mengenmäßig reduziert in den Kanal eintreten, wo er ebenfalls weiter konzentrationsmäßig reduziert wird. Der Wasserstoff wird so kontrolliert über den Produktenstrom in die Umgebungsluft in verringerter Konzentration abgelassen. Weiterhin erlaubt ein erfindungsgemäßer Tragbehälter die Erwärmung des zuströmenden Reaktanden, während durch den Reaktandenstrom bzw. den Eduktenstrom einzelne Komponenten der Energieversorgungseinheit gekühlt oder auf geeignete Betriebstemperatur gehalten werden. Das Temperaturprofil wird innerhalb der Energieversorgungseinheit vergleichmäßigt.

Der aufgeschäumte Tragbehälter, ein aus einem Isolier- oder Schaumstoff gefertigter raumfüllender Behälter, umgibt den Brennstoffzellenstapel. Der Tragbehälter ist raumbildend. Der Tragbehälter ist raumausfüllend. Der Tragbehälter ist raumbestimmend. Der Tragbehälter bestimmt die Ausdehnungen der Energievorsorgungseinheit. Der Tragbehälter lässt sich nur noch durch ein metallisches oder sonst wie geeignetes Gehäuse begrenzen und abdecken. Der Tragbehälter ist eine die Komponenten einfassende äußere Konstruktion. Der Tragbehälter kann als Kunststoffeinfassung bezeichnet werden. Nach einem weiteren Aspekt kann der elastische, wärmedämmende Tragbehälter neben dem Brennstoffzellenstapel noch weitere Sekundärzellen umfassen, die mit den weiteren Komponenten eine autarke, kompakte, in dem Tragbehälter angeordnete Energievorsorgungseinheit bilden.

Die Erfindung kann noch besser verstanden werden, wenn Bezug auf die beiliegenden Figuren genommen wird, wobei
Figur eine kompakte erfindungsgemäße Energieversorgungseinheit zeigt,
Figur 2 die untere Schicht des Tragbehälters in aufgeklappter Form zeigt,
Figur 3 die obere Schicht eines erfindungsgemäßen Tragbehälters in aufgeklappter Form zeigt und
Figur 4 eine alternative Ausführungsform einer Teilschale einer Energievorsorgungseinheit mit zusätzlichen Akkumulatoren zeigt.

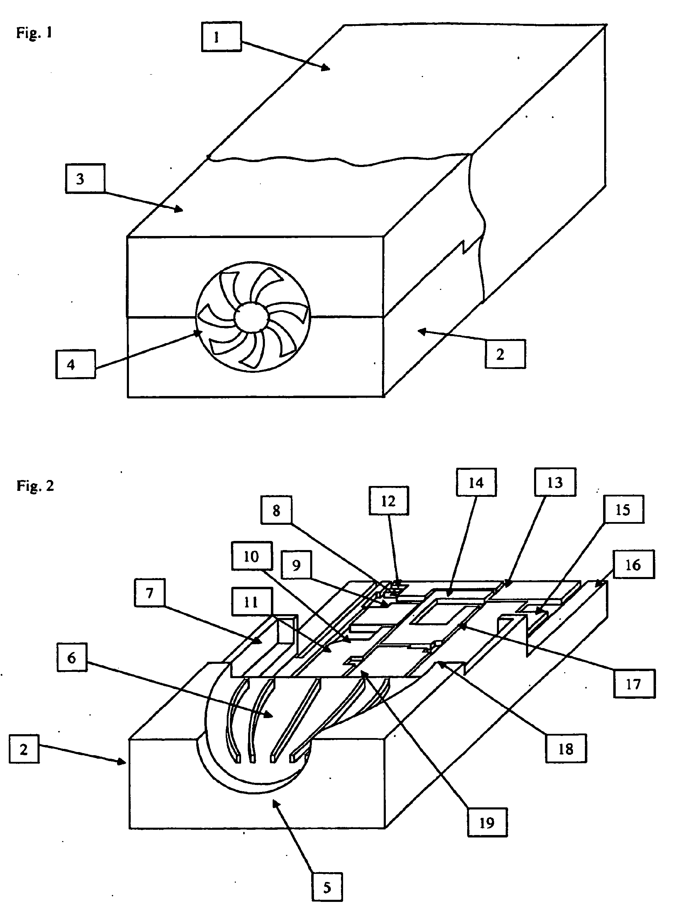

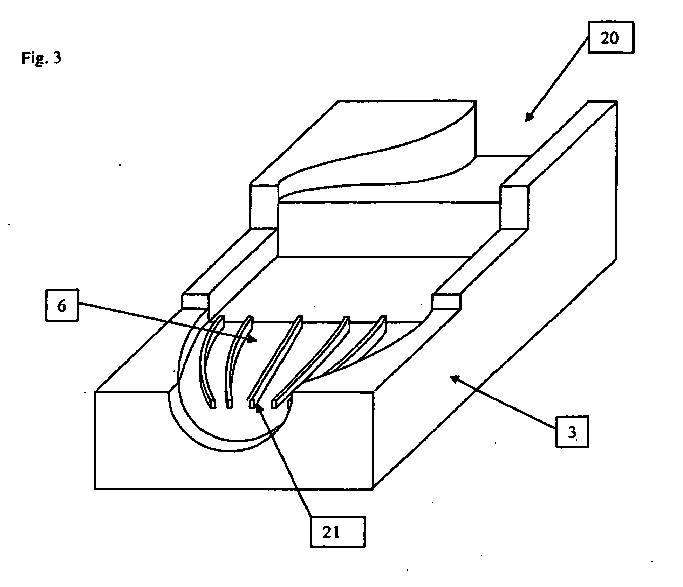

Von außen betrachtet wirkt die Energieversorgungseinheit, so wie in Figur 1 dargestellt, als monolithischer Block, der von einem Gehäuse 1 abgeschlossen ist. Das Gehäuse 1 kann eine Metallhülle sein. Alternativ kann das Gehäuse 1 ein Kunststoffkasten sein. Auch sind andere Materialen für das Gehäuse vorstellbar. Das Gehäuse 1 ist über die untere Schicht 2 und die obere Schicht 3, die ineinander eingreifen, überzustülpen. Das Gehäuse 1 bzw. die aneinander anliegenden Schichten 2, 3 aus expandiertem Kunststoff weisen an geeigneten Stellen Zuleitungs- und Ableitungsöffnungen auf. Eine Zuleitungsöffnung bietet Raum für einen Ventilator 4, der die Umgebungsluft ansaugt und beschleunigt an die Brennstoffzelle im Inneren des Gehäuses 1 heranbringt. Wird das Gehäuse 1 nach Figur 1 in seine beiden Hälften, die sich aus den Schichten 2, 3 ergeben, auseinandergeklappt, so sind so ähnliche Platten zu sehen, wie sie in Figur 2 und Figur 3 dargestellt sind. Die untere Schicht 2 und die obere Schicht 3 sind mehrstufig abgesetzt. Die Stufen korrespondieren zueinander so, dass die beiden Schichten 2, 3 zusammen einen viereckigen Kasten bilden können. Die Stufen der unteren Schicht 2 und der oberen Schicht 3 greifen bei Anlagerung ineinander ein. Als Sicherungsmaßnahme kann das Eingreifen in einer verhakenden oder sonst wie geeigneten sperrenden Art und Weise erfolgen. Eine weitere Form der Sicherung besteht in dem Überstülpen des umschließenden Gehäuses 1.

In der untersten Lage der unteren Schicht ist der Raum für ausgewählte Komponenten der Energieversorgungseinheit vorgesehen. Die untere Schicht 2 bietet in der untersten Lage Aussparungen an, die wenigstens teilweise untereinander durch Verbindungsstrecken zusammengeschlossen sind, so dass in diesen Rohre, Leitungen oder sonstige Anschlussmittel zwischen den einzelnen Komponenten eingelegt werden können. Beispielhaft zeigt Figur 2, dass eine Aussparung für einen Wasserstoffdrucksensor 8, eine Aussparung für ein Wasserstoffisolationsventil 9, eine Aussparung für ein Wasserstoffdruckminderungsventil 10, eine Aussparung für eine Wasserstoffrohrleitung 11, eine Aussparung für ein Anschlussmittel wie eine Anschlussverschraubung für eine Wasserstoffzuleitung 11, eine Aussparung für einen Anschluss eines Steuerungskontrollers des Gehäuses 13, eine Aussparung für einen Kabelbaum 14, eine Aussparung für elektrische Kontakte 15 und eine Aussparung für Leistungskabel 16 vorgehalten werden können. Daneben können noch weitere Aussparungen vorgesehen werden, so zum Beispiel eine Aussparung für eine Stromverteilung oder eine Sicherung 17, eine Aussparung für ein Wasserstoffpurgeventil 18 oder eine Aussparung für einen Temperatursensor 19. Komponenten, aus denen Wasserstoff austreten kann, oder Komponenten, die gefährliche Zündenergie aufgrund eines elektrischen oder elektronischen Fehlers abgeben können, können günstigerweise im unteren hinteren Teil der unteren Schicht 2 des Gehäuses 1 so platziert werden, dass über ihnen der Auslass 20 des Luftkanals in der oberen Schicht 3 (siehe Figur 3) drüber weg gehen kann. In der Zuleitung, der Luftführung 6, sind angeformte Gleichverteilungsmittel 21 vorgesehen, die sowohl aus der unteren Schicht 2 als auch aus der oberen Schicht 3 heraustreten können. Die Gleichverteilungsmittel 21 können auch unterteilt sein, so dass ein Teil ein Stück der unteren Schicht 2 und ein Teil der oberen Schicht 3 darstellt. Wenn die jeweiligen Gleichverteilungsmittel 21 übereinander liegen, weil die beiden Schichten 2, 3 übereinander liegen, können die Gleichverteilungsmittel von der Unterseite des Anströmkanals zur Oberseite des Anströmkanals durchgängig sein. Ungefähr auf halber Strecke des Kanals 6, 20 befindet sich eine relativ große Aussparung, die Aussparung 7, die für den Brennstoffzellenstapel bestimmt ist. Die Aussparung 7 verläuft quer zu der Luftführung 6 und dem Auslass des Luftkanals 20. Durch diese Anordnung können die Brennstoffzellen seitlich angeströmt werden, und seitlich können die Produkte über den Auslass 20 abströmen.

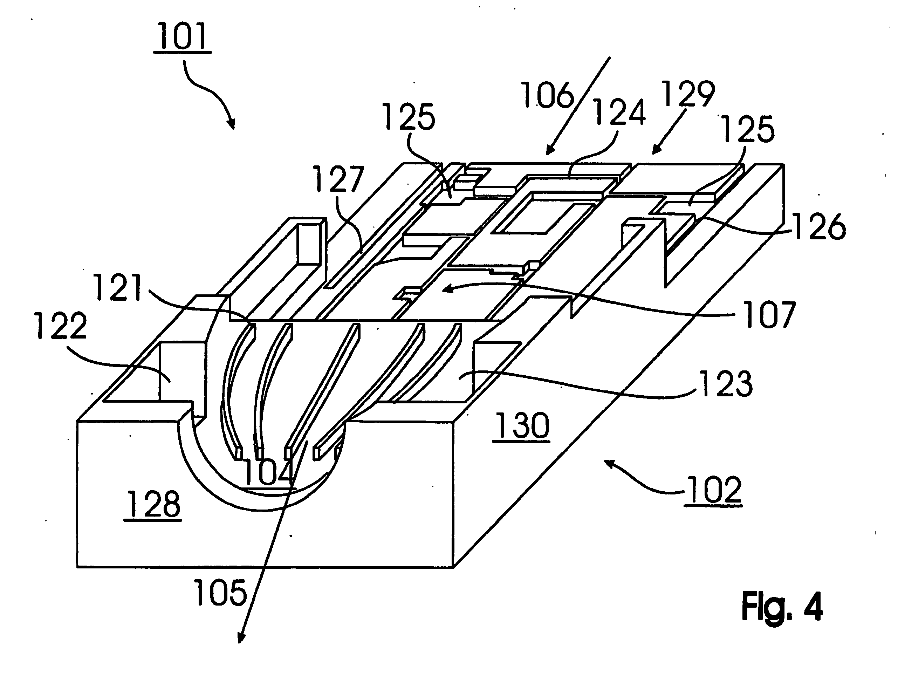

Eine weitere Ausgestaltung eines Tragbehälterteils einer kompakten, tragfähigen Energieversorgungseinheit lässt sich in Figur 4 betrachten. Das Gehäuse 101 ist nur teilweise durch die untere Schale, seiner untersten Schicht 102, dargestellt. Die gesamte Schicht 102 ist aus dem gleichen, einheitlichen Werkstoff hergestellt. Die unterste Schicht 102, so wie nicht dargestellt die übrigen darauf folgenden Schichten, ist aus expandiertem Kunststoff hergestellt. Die jeweilige Schicht 102 hat Aussparungen 105, 107, 122, 123, 124, 125, 126, 127. Auch ist es möglich, nur eine Schicht 102 mit den zahlreichen Aussparungen auszustatten. Die Schicht 102 ist wie ein viereckiger Kasten gestaltet, der eine Ausgangsseite 128, eine Eingangsseite 129 und eine Längsseite 130 aufweist. Die Ausgangsseite 128 schaut dem Betrachter entgegen. Sie steht aus der Bildebene heraus. In der Ausgangsseite 128 ist eine Aussparung 105 für ein (nicht näher dargestelltes) Gebläse 104. Das Gebläse 104 hat eine saugende Funktion. Es saugt abstromseitig die Luft aus dem Brennstoffzellenstapel, der in der Aussparung 107 für den Brennstoffzellenstapel in der Schicht 102 sitzt, heraus. Der Abstrom ist eine Zusammensetzung aus Produkten der elektrochemischen Reaktion und abgereicherten Edukten. Der Luftkanaleinlass 106 befindet sich auf der Eingangsseite 129 des Gehäuses 101. Die Luft wird über den Luftkanal zunächst über zu kühlende Bauteile geführt. Solche zu kühlenden Bauteile können zum Beispiel Leistungshalbleiter oder Steuerungselektroniken wie Steuerplatinen mit Mikrokontrollern sein. Die Leistungshalbleiter sitzen selbsthaltend in der unteren Schicht 102 des Gehäuses 101 in einer dafür vorgesehenen Aussparung 124. In ein bis zwei weiteren Aussparungen 122, 123 sitzen ebenfalls durch den expandierten Kunststoff umschlossene Akkumulatoren als "back-up"-Lösungen für den Brennstoffzellenstapel. Ungefähr mittig in dem Gehäuse 101 ist eine Aussparung 107 für den Brennstoffzellenstapel. Die Luftströmungsrichtung verläuft quer zur Erstreckung des Brennstoffzellenstapels. In der gleichen Ebene, wie die Aussparung 124 für die Steuerplatine liegt, sind weitere Aussparungen 125, 126, 127 vorgesehen. Die einzelnen (Hilfs-)Komponenten des Energieversorgungssystems erstrecken sich in der gleichen Ebene. Die Komponenten sind von dem expandierten Kunststoff umschlossen. So gibt es verschiedene Aussparungen 125 für Sensoren und Schalter. Auch gibt es Aussparungen 126 für elektrische Kabel zwischen den einzelnen Komponenten; und es gibt Aussparungen 127 für Rohrleitungen, z. B. für Wasserstoff.

Als geeignete Materialien für den expandierten Kunststoff des Tragbehälters haben sich Polypropylen, Polyurethan und Polyethylen erwiesen. Weitere geeignete Materialien für den expandierten Kunststoff müssen im Betriebstemperaturbereich der Energieversorgungseinheit, startend von negativen Temperaturen bis zur maximalen Betriebstemperatur der Brennstoffzelle, formstabil, alterungsbeständig, schlagfest und temperaturausgleichend sein.

Die zuvor benannten Materialien stellen einen günstigen Kompromiss dieser Anforderungen dar.

Für jeden Fachmann ist es einsichtig, dass zum Schutzumfang der vorliegenden Erfindung auch solche Gestaltungen gehören, in denen der Tragbehälter nicht nur aus zwei Schichten, sondern auch aus drei oder vier Schichten oder sogar mehr Schichten besteht. Der expandierte Kunststoff trägt nicht wesentlich zur Gewichtserhöhung der Energieversorgungseinheit bei, er macht aber erfindungsgemäße Energieversorgungseinheiten, die mit brennbaren Reaktanden oder Edukten arbeiten, betriebssicherer. Der Tragbehälter schützt die einzelnen Komponenten, die eine Energieversorgungseinheit als Ganzes bilden, und er gleicht Temperaturschwankungen, mechanische Einflüsse und unerwünschte Betriebsweisen bzw. Gefährdungen aus.

### Bezugszeichenliste:

- 1: Gehäuse
- 2: Untere Schicht aus expandiertem Kunststoff
- 3: Obere Schicht aus expandiertem Kunststoff
- 4: Ventilator
- 5: Aussparung für Ventilator
- 6: Luftkanal Einlass
- 7: Aussparung für Brennstoffzellenstapel
- 8: Aussparung für Wasserstoff-Drucksensor
- 9: Aussparung für Wasserstoff-Isolationsventil
- 10: Aussparung für Wasserstoff-Druckminderer
- 11: Aussparung für Wasserstoff-Rohrleitung
- 12: Anschluss für Wasserstoff am Gehäuse
- 13: Anschluss Controller am Gehäuse
- 14: Aussparung für Kabelbaum
- 15: Aussparung für Kontakt
- 16: Anschluss Leistungkabel am Gehäuse
- 17: Aussparung für Stromverteilung oder Sicherungen
- 18: Aussparung für Wasserstoff-Purgeventil
- 19: Aussparung für Temperatursensor
- 20: Auslass des Luftkanals
- 21: Gleichverteilungsmittel
- 101: Gehäuse
- 102: untere Schicht aus expandiertem Kunststoff
- 104: Gebläse
- 105: Aussparung für Gebläse, insbesondere als saugendes Gebläse
- 106: Luftkanaleinlass
- 107: Aussparung für Brennstoffzellenstapel
- 122: Aussparung für erstes Akkumulatorpaket
- 123: Aussparung für zweites Akkumulatorpaket
- 124: Aussparung für zu kühlende Komponente, wie Steuerplatine
- 125: Aussparung für Komponenten der Energieversorgungseinheit, wie Sensoren, Schalter
- 126: Aussparung für Kabel der Energieversorgungseinheit
- 127: Aussparung für Rohre der Energieversorgungseinheit
- 128: Ausgangsseite des Gehäuses
- 129: Eingangsseite des Gehäuses
- 130: Längsseite des Gehäuses

## Patentansprüche

1. Tragbehälter (1, 2, 3, 101, 102) einer kompakten Energieversorgungseinheit,
die Energie aus einem Brennstoffzellenstapel, insbesondere einem Brennstoffzellenstapel mit Polymerelektrolytmembranbrennstoffzellen, liefern kann, und die verschiedene, voneinander abgesetzte Komponenten umfasst,
aus einem expandierten Kunststoff (2, 3, 102), wie expandiertes Polypropylen, Polyurethan oder Polyethylen, mit wenigstens einem Kanal,
**dadurch gekennzeichnet, dass**
der Kanal (6, 20, 106) ein Reaktandenführungskanal ist
und der Tragbehälter (1, 2, 3, 101, 102) Aussparungen (7, 8, 9, 10, 11, 14, 15, 16, 17, 18, 19, 107, 122, 123, 124, 125, 126, 127) aufweist, in denen einzelne Komponenten ohne weitere Befestigungsmaßnahmen liegen.

2. Tragbehälter (1, 2, 3, 101, 102) nach Anspruch 1, **dadurch gekennzeichnet, dass** der Reaktand, der durch den Kanal (6) geführt ist, ein sauerstoffhaltiges Gas ist, vorzugsweise durch Beschleunigungsmittel (4) beschleunigte, insbesondere unter Überdruck stehende, Umgebungsluft ist,
und dass der Reaktand, insbesondere mittels Gleichverteilungsmittel (21), in die Kathode der Brennstoffzellen geleitet wird.

3. Tragbehälter (1, 2, 3, 101, 102) nach einem der vorhergehenden Ansprüche, **dadurch gekennzeichnet, dass** die Gleichverteilungsmittel (21) Führungsstege sind, die den strömenden Reaktanden leiten, und wobei der Kanal (6) unmittelbar vor der Brennstoffzelle von einer Seite des Tragbehälters (1, 2, 3, 101, 102) zur gegenüberliegenden Seite des Tragbehälters (1, 2, 3, 101, 102) abzüglich einer Wandstärke reicht.

4. Tragbehälter (1, 2, 3, 101, 102) nach einem der vorhergehenden Ansprüche, **dadurch**
**gekennzeichnet, dass**
der Tragbehälter (1, 2, 3, 101, 102) formschlüssig den einzusetzenden Brennstoffzellenstapel in abdichtender Weise umschließt
und insbesondere der Reaktand, der durch den Kanal (6, 106) geführt ist, ein wasserstoffhaltiges Gas ist.

5. Tragbehälter (1, 2, 3, 101, 102) nach einem der vorhergehenden Ansprüche, **dadurch**
**gekennzeichnet, dass**
wasserstoffführende, im Tragbehälter (1, 2, 3, 101, 102) eingebettete, Komponenten (7, 8, 9, 10, 11, 12, 18) unterhalb des Kanals (6, 20, 106) so platziert sind, dass austretender Wasserstoff entgegen der Schwerkraft in den Kanal (6, 20, 106) diffundieren kann und dort auf Grund der Reaktandenströmung konzentrationsmäßig verringert aus dem Tragbehälter (1, 2, 3, 101, 102) kontrolliert ausgebracht werden kann.

6. Tragbehälter (1, 2, 3, 101, 102) nach einem der vorhergehenden Ansprüche, **dadurch gekennzeichnet, dass** der Kanal (20) eine mit Reaktanden abgereicherte und mit Produkten angereicherte Abströmungsöffnung darstellt.

7. Tragbehälter (1, 2, 3, 101, 102) nach einem der vorhergehenden Ansprüche, **dadurch gekennzeichnet, dass** der Kanal (6, 20, 106) eine geschlossene Oberfläche aufweist, über die unter einem Druckabfall, der kleiner als 0,25 bar, vorzugsweise kleiner als 20 mbar, ist, der Reaktand durch das Gehäuse (1, 101) geführt wird.

8. Tragbehälter (1, 2, 3, 101, 102) nach einem der vorhergehenden Ansprüche, **dadurch**
**gekennzeichnet, dass**
der Kanal (6, 20, 106) ein zweigeteilter Kanal (6 und 20, 106) ist, dessen einer Teil (6) mehrfach aufgefächert kathodenseitig an Brennstoffzellen eines Brennstoffzellenstapels seitlich mündet, der zu kühlende Komponenten wie ein Board eines Steuerungskontrollers, Leistungselektronik oder Energiespeicher der Energieversorgungseinheit überspannt und so in dem Kanal strömender Reaktand eine Temperaturerhöhung zur Anpassung der Reaktandentemperatur in Richtung auf das Brennstoffzellentemperaturniveau erfährt,
während der andere Teil (20) wasserstoffführende Bauteile (7, 8, 9, 10, 11, 12, 18) überspannt, damit durch das Edukt aus der Brennstoffzelle eine Gefährdungsreduzierung durch Konzentrationsverringerung von Wasserstoffrestbeständen ermöglicht wird.

9. Tragbehälter (1, 2, 3. 101, 102) nach einem der vorhergehenden Ansprüche, **dadurch gekennzeichnet, dass** der Tragbehälter (1, 2, 3, 101, 102) aus wenigstens zwei Schichten (2, 3, 102) besteht, die miteinander verhakt, einen, vorzugsweise viereckigen Block bilden, wobei jede Schicht (2, 3, 102) mehrstufig und spiegelbildlich in Bezug auf die Stufen der korrespondierenden Schicht aufgebaut ist, um insbesondere
eine untere Lage für einen Wasserstoffdrucksensor (8), für ein Wasserstoffisolationsventil (9), für ein Wasserstoffdruckminderungsventil (11), für eine Wasserstoffrohrleitung (12) und für elektrische und elektronische Bauteile (13, 14, 15, 16, 17, 19) zu bieten, und
um eine mittlere Lage für einen Abschnitt eines Brennstoffzellenstapels (7, 107) zu bieten, und
um eine obere Lage für eine Reaktandenzuführung (6, 106) zu bieten.

10. Tragbehälter (1, 2, 3, 101, 102) nach einem der vorhergehenden Ansprüche, **dadurch gekennzeichnet, dass**
zur Förderung der Luft abströmseitig ein Lüfter (4, 104) im Bereich des Endes des Tragbehälters (1, 2, 3, 101, 102) in diesem sitzt, der saugend das eine Edukt, nämlich Luft, durch den Brennstoffzellenstapel leitet.

11. Trägbehälter (1, 2, 3, 101, 102) nach einem der vorhergehenden Ansprüche, **dadurch gekennzeichnet, dass**
ein Wasserstoffkonzentrationssensor abströmseitig hinter dem Brennstoffzellenstapel in dem Tragbehälter (1, 2, 3, 101, 102) von diesem gehalten im mit Produkten angereicherten Abluftstrom sitzt.

12. Verwendung eines Tragbehälters (1, 2, 3, 101, 102), insbesondere nach einem der Ansprüche 1 bis 11, in dem Komponenten eines Brennstoffzellensystems (7, 8, 9, 10, 11, 12, 13, 14, 15, 16, 17, 18, 19, 107, 122, 123, 124, 125, 126, 127) eingebettet sind, zur Bildung einer Stromversorgungseinheit auf Brennstoffzellenbasis,
wobei der Tragbehälter (1, 2, 3, 101, 102), vorzugsweise durch eine metallische oder kunststoffartige Umhüllung (1, 101) abgeschlossen, eine solche Form aufweist, dass er in einem standardisierten Gehäuse, wie einem 19"-Rackeinschub, mechanisch fest platzierbar ist, um dort eine Stromversorgungseinheit im mobilen Bereich, wie Sportbootsbereich, oder sicherheitsrelevanten Bereich, wie Notstromaggregate zum Beispiel für Handybodenstationen, Mobilfunkbasisstationen, zu bilden.

13. Verfahren zur Gefährdungsreduzierung einer Energieversorgungseinheit (1, 2, 3, 4, 6, 7, 8, 9, 10, 11, 12, 13, 14, 15, 16, 17, 18, 19), die mit Wasserstoff arbeitet, **dadurch gekennzeichnet, dass**
ein Tragbehälter (1, 2, 3, 101, 102), insbesondere nach einem der Ansprüche 1 bis 11, aus expandiertem Kunststoff wie Polypropylen bereit gestellt wird,
der mehrschichtig Komponenten der Energieversorgungseinheit (1, 2, 3, 4, 6, 7, 8, 9, 10, 11, 12, 13, 14, 15, 16, 17, 18, 19) aufnimmt, die wenigstens teilweise zwischen den Schichten (2, 3, 102) verspannungs- und verschraubungslos eingelegt werden, und der dabei gleichzeitig wenigstens einen oberflächengeschlossenen Kanal (6, 20, 106) mit einem geringeren Druckabfall als 0,25 bar, vorzugsweise weniger als 20 mbar, bildet, welcher zur Reaktandenführung wenigstens eines Reaktanden einer Brennstoffzelle der Energieversorgungseinheit (1, 2, 3, 4, 6, 7, 8, 9, 10, 11, 12, 13, 14, 15, 16, 17, 18, 19), eingeschlossen und getrennt von der Umgebungsluft, wasserstoffführende Bauteile (7, 8, 9, 10, 11, 12, 18) überspannt, so dass ausdiffundierender Wasserstoff konzentrationsmäßig verringert kontrolliert abströmseitig in einem verbleibenden Eduktenstrom (20) zusammen mit Produkten in die Umgebungsluft abgelassen wird.

## Claims

1. Carrying container (1, 2, 3, 101, 102) of a compact power supply unit, which can supply power from a fuel cell stack, in particular a fuel cell stack with polymer electrolyte membrane fuel cells, and which comprises different components which are offset with respect to each other, consisting of an expanded plastic (2, 3, 102), such as expanded polypropylene, polyurethane or polyethylene, with at least one channel,
**characterised in that**
the channel (6, 20, 106) is a reactant-guiding channel, and the carrying container (1, 2, 3, 101, 102) has cutouts (7, 8, 9, 10, 11, 14, 15, 16, 17, 18, 19, 107, 122, 123, 124, 125, 126, 127) in which individual components are situated without further fastening measures.

2. Carrying container (1, 2, 3, 101, 102) according to Claim 1, **characterised in that** the reactant which is guided through the channel (6) is an oxygen-containing gas, is preferably ambient air which is accelerated by acceleration means (4) and is in particular pressurised, and that the reactant is conducted into the cathodes of the fuel cells in particular by means of uniform distribution means (21).

3. Carrying container (1, 2, 3, 101, 102) according to one of the preceding claims, **characterised in that** the uniform distribution means (21) are guiding ridges which conduct the flowing reactants, and wherein the channel (6) directly upstream of the fuel cell reaches from one side of the carrying container (1, 2, 3, 101, 102) to the opposite side of the carrying container (1, 2, 3, 101, 102) minus a wall thickness.

4. Carrying container (1, 2, 3, 101, 102) according to one of the preceding claims, **characterised in that** the carrying container (1, 2, 3, 101, 102) encloses the fuel cell stack to be used in a form-fitting and sealing manner, and in particular the reactant which is guided through the channel (6, 106) is a hydrogen-containing gas.

5. Carrying container (1, 2, 3, 101, 102) according to one of the preceding claims, **characterised in that** hydrogen-guiding components (7, 8, 9, 10, 11, 12, 18), which are embedded in the carrying container (1, 2, 3, 101, 102), are placed underneath the channel (6, 20, 106) in such a manner that escaping hydrogen can diffuse against gravity into the channel (6, 20, 106) and can be brought out of the carrying container (1, 2, 3, 101, 102) in a controlled manner from there with a reduced concentration owing to the flow of reactants.

6. Carrying container (1, 2, 3, 101, 102) according to one of the preceding claims, **characterised in that** the channel (20) forms an outflow opening which is depleted of reactants and enriched with products.

7. Carrying container (1, 2, 3, 101, 102) according to one of the preceding claims, **characterised in that** the channel (6, 20, 106) has a closed surface by means of which the reactant is guided through the housing (1, 101) under a pressure drop which is less than 0.25 bar, preferably less than 20 mbar.

8. Carrying container (1, 2, 3, 101, 102) according to one of the preceding claims, **characterised in that** the channel (6, 20, 106) is a channel (6 and 20, 106) which is divided into two, of which one part (6) opens laterally on the cathode side of fuel cells of a fuel cell stack in a multiply fanned manner, which spans components to be cooled such as a board of a controller, power electronics or power stores of the power supply unit, and reactant flowing in the channel thus undergoes a rise in temperature to match the reactant temperature in the direction of the fuel cell temperature level, whereas the other part (20) spans hydrogen-guiding components (7, 8, 9, 10, 11, 12, 18) so that a hazard reduction is made possible by reducing the concentration of hydrogen residues by means of the reagent from the fuel cell.

9. Carrying container (1, 2, 3, 101, 102) according to one of the preceding claims, **characterised in that** the carrying container (1, 2, 3, 101, 102) consists of at least two layers (2, 3, 102), which, when interlocked with each other, form a preferably rectangular block, wherein each layer (2, 3, 102) is constructed in a multistep and mirror-image manner with respect to the steps of the corresponding layer, in order to have in particular a lower level for a hydrogen pressure sensor (8), for a hydrogen isolation valve (9), for a hydrogen pressure-reducing valve (11), for a hydrogen duct (12) and for electrical and electronic components (13, 14, 15, 16, 17, 19), and in order to have a middle level for a section of a fuel cell stack (7, 107), and in order to have an upper level for a reactant feed (6, 106).

10. Carrying container (1, 2, 3, 101, 102) according to one of the preceding claims, **characterised in that** in order to convey the air, a fan (4, 104) is situated in the carrying container on the outflow side in the region of the end of the carrying container (1, 2, 3, 101, 102), which fan conducts a reagent, namely air, through the fuel cell stack in a sucking manner.

11. Carrying container (1, 2, 3, 101, 102) according to one of the preceding claims, **characterised in that** a hydrogen concentration sensor is situated on the outflow side downstream of the fuel cell stack in the outflow which is enriched with products in the carrying container (1, 2, 3, 101, 102), held by the latter.

12. Use of a carrying container (1, 2, 3, 101, 102), in particular according to one of Claims 1 to 11, in which components of a fuel cell system (7, 8, 9, 10; 11, 12, 13, 14, 15, 16, 17, 18, 19, 107, 122, 123, 124, 125, 126, 127) are embedded, in order to form a power supply unit based on fuel cells, wherein the carrying container (1, 2, 3, 101, 102), preferably closed off by a metallic or plastic-like shell (1, 101), has a form such that it can be placed mechanically securely in a standardised housing such as a 19" rackmount, in order to form a power supply unit in the mobile field such as the motor boat field, or safety-relevant field such as emergency generators for example for mobile phone base stations, radio base stations.

13. Method for reducing hazards of a power supply unit (1, 2, 3, 4, 6, 7, 8, 9, 10, 11, 12, 13, 14, 15, 16, 17, 18, 19), which operates with hydrogen, **characterised in that** a carrying container (1, 2, 3, 101, 102), in particular according to one of Claims 1 to 11, of expanded plastic such as polypropylene is provided, which accommodates components of the power supply unit (1, 2, 3, 4, 6, 7, 8, 9, 10, 11, 12, 13, 14, 15, 16, 17, 18, 19) in a multilayer manner, which are inserted at least partially between the layers (2, 3, 102) in a clamping- and screw-fastening-free manner, and which at the same time forms at least one channel (6, 20, 106) with a closed surface and with a pressure drop lower than 0.25 bar, preferably less than 20 mbar, which spans hydrogen-guiding components (7, 8, 9, 10, 11, 12, 18) in order to guide at least one reactant of a fuel cell of the power supply unit (1, 2, 3, 4, 6, 7, 8, 9, 10, 11, 12, 13, 14, 15, 16, 17, 18, 19), in a closed off manner and separately from the ambient air, so that diffused out hydrogen is released together with products into the ambient air in a remaining reagent flow (20) on the outflow side in a controlled manner with a reduced concentration.

## Revendications

1. Récipient porteur (1, 2, 3, 101, 102) d'unité d'alimentation en énergie compacte pouvant fournir de l'énergie provenant d'un empilement de piles à combustible, notamment d'un empilement de piles à combustible pourvu de piles à combustible à membrane électrolyte polymère, et comprenant différents composants décalés les uns par rapport aux autres, fabriqué en matière synthétique (2, 3, 102) expansée, telle que du polypropylène, du polyuréthane ou du polyéthylène expansé, avec au moins un canal,
**caractérisé en ce que :**
le canal (6, 20, 106) est un canal de guidage de réactif ;
et que le récipient porteur (1, 2, 3, 101, 102) présente des ouvertures (7, 8, 9, 10, 11, 14, 15, 16, 17, 18, 19, 107, 122, 123, 124, 125, 126, 127) dans lesquelles des composants individuels reposent sans autres moyens de fixation.

2. Récipient porteur (1, 2, 3, 101, 102) selon la revendication 1, **caractérisé en ce que** le réactif guidé à travers le canal (6) est un gaz contenant de l'oxygène, de préférence de l'air ambiant accéléré au moyen de moyens d'accélération (4), notamment comprimé ;
et que le réactif est guidé dans la cathode des piles à combustible, notamment à l'aide de moyens d'équipartition (21).

3. Récipient porteur (1, 2, 3, 101, 102) selon l'une quelconque des revendications précédentes, **caractérisé en ce que** les moyens d'équipartition (21) sont des passerelles de guidage qui guident le réactif s'écoulant et le canal (6) passant directement de la pile à combustible située d'un côté du récipient porteur (1, 2, 3, 101, 102) au côté opposé du récipient porteur (1, 2, 3, 101, 102), déduction faite d'une épaisseur de paroi.

4. Récipient porteur (1, 2, 3, 101, 102) selon l'une quelconque des revendications précédentes,
**caractérisé en ce que :**
le récipient porteur (1, 2, 3, 101, 102) entoure de façon étanche et par complémentarité de formes l'empilement de piles à combustible à insérer ;
et notamment le réactif guidé à travers le canal (6, 106) qui prend la forme d'un gaz contenant de l'hydrogène.

5. Récipient porteur (1, 2, 3, 101, 102) selon l'une quelconque des revendications précédentes, **caractérisé en ce que** les composants (7, 8, 9, 10, 11, 12, 18) encastrés dans le récipient porteur (1, 2, 3, 101, 102) et guidant l'hydrogène sont placés de telle sorte en dessous du canal (6, 20, 106) que l'hydrogène sortant peut être diffusé dans le canal (6, 20, 106) contre la force de gravité et peut sortir en cet endroit du récipient porteur (1, 2, 3, 101, 102), de façon contrôlée et en concentration réduite, du fait du flux de réactif.

6. Récipient porteur (1, 2, 3, 101, 102) selon l'une quelconque des revendications précédentes, **caractérisé en ce que** le canal (20) constitue une ouverture d'écoulement enrichie en produits et appauvrie en réactif.

7. Récipient porteur (1, 2, 3, 101, 102) selon l'une quelconque des revendications précédentes, **caractérisé en ce que** le canal (6, 20, 106) comporte une surface fermée via laquelle le réactif est guidé à travers le boîtier (1, 101) avec une chute de pression inférieure à 0,25 bar, de préférence inférieure à 20 mbar.

8. Récipient porteur (1, 2, 3, 101, 102) selon l'une quelconque des revendications précédentes,
**caractérisé en ce que :**
le canal (6, 20, 106) est un canal (6 et 20, 106) en deux parties dont la première partie (6) débouche en côté, côté cathode, de façon ouverte en éventail, au niveau des piles à combustible d'un empilement de piles à combustible, ledit canal recouvrant les composants à refroidir, tels qu'une carte de système de commande, de système électronique de puissance ou d'accumulateur de l'unité d'alimentation en énergie, entraînant ainsi une augmentation de température dans le canal de réactif s'écoulant permettant d'adapter la température du réactif au niveau de température des piles à combustible ;
tandis que l'autre partie (20) recouvre les composants (7, 8, 9, 10, 11, 12, 18) guidant l'hydrogène, permettant ainsi de réduire le risque lié au produit de départ sortant de la pile à combustible en réduisant la concentration en hydrogène restant.

9. Récipient porteur (1, 2, 3, 101, 102) selon l'une quelconque des revendications précédentes, **caractérisé en ce que** le récipient porteur (1, 2, 3, 101,102) se compose d'au moins deux couches (2, 3, 102) accrochées l'une à l'autre, formant une unité de préférence rectangulaire, chaque couche (2, 3, 102) présentant plusieurs niveaux et étant construite en miroir par rapport aux niveaux de la couche correspondante :
de façon à offrir notamment :
une position inférieure pour un capteur de pression d'hydrogène (8), pour une vanne d'isolation d'hydrogène (9), pour une vanne de réduction de pression d'hydrogène (11), pour une conduite tubulaire d'hydrogène (12) et pour des composants électriques et électroniques (13, 14, 15, 16, 17, 19) ;
une position centrale pour un segment d'empilement de piles à combustible (7, 107) ; et
une position supérieure pour un dispositif d'introduction de réactif (6, 106).

10. Récipient porteur (1, 2, 3, 101, 102) selon l'une quelconque des revendications précédentes, **caractérisé en ce qu'**un ventilateur (4, 104) est positionné en aval pour amener de l'air par aspiration dans la zone d'extrémité du récipient porteur (1, 2, 3, 101, 102), ledit ventilateur conduisant le produit de départ, notamment l'air, à travers l'empilement de piles à combustible.

11. Récipient porteur (1, 2, 3, 101, 102) selon l'une quelconque des revendications précédentes, **caractérisé en ce qu'**un capteur de concentration en hydrogène est positionné en aval derrière l'empilement de piles à combustible, dans le récipient porteur (1, 2, 3, 101, 102), et est maintenu par lui dans le flux d'évacuation enrichi en produits.

12. Utilisation d'un récipient porteur (1, 2, 3, 101, 102), notamment selon l'une quelconque des revendications 1 à 11, dans lequel les composants d'un système de piles à combustible (7, 8, 9, 10 ; 11, 12, 13, 14, 15, 16, 17, 18, 19, 107, 122, 123, 124, 125, 126, 127) sont encastrés, pour former une unité d'alimentation en courant à base de piles à combustible ;
le récipient porteur (1, 2, 3, 101, 102) étant isolé, de préférence par une enveloppe (1, 101) métallique ou en matière synthétique, prenant une forme telle qu'il peut être placé fixement d'un point de vue mécanique dans un boîtier standard, comme un insert en rack de 19", pour former à cet endroit une unité d'alimentation en courant placée dans une zone mobile, telle qu'une zone de hors-bord ou une zone critique sur le plan de la sécurité, telle que des groupes électrogènes de secours, par exemple pour stations de base de téléphonie mobile, stations terrestres de téléphonie mobile.

13. Procédé de réduction des risques liés à une unité d'alimentation en énergie (1, 2, 3, 4, 6, 7, 8, 9, 10, 11, 12, 13, 14, 15, 16, 17, 18, 19) fonctionnant à l'hydrogène, **caractérisé en ce que :**
un récipient porteur (1, 2, 3, 101, 102), notamment selon l'une quelconque des revendications 1 à 11, en matière synthétique expansée, telle que du polypropylène, est utilisé ;
ledit récipient abritant les composants composés de plusieurs couches de l'unité d'alimentation en énergie (1, 2, 3, 4, 6, 7, 8, 9, 10, 11, 12, 13, 14, 15, 16, 17, 18, 19) lesdits composants étant insérés au moins en partie entre les couches (2, 3, 102) sans serrage et sans vissage, et formant par là même au moins un canal (6, 20, 106) fermé en surface avec une chute de pression inférieure à 0,25 bar, de préférence inférieure à 20 mbar, ledit canal contenant au moins le réactif d'une pile à combustible de l'unité d'alimentation en énergie (1, 2, 3, 4, 6, 7, 8, 9, 10, 11, 12, 13, 14, 15, 16, 17, 18, 19) pour le guider et recouvrant les composants guidant l'hydrogène (7, 8, 9, 10, 11, 12, 18) de façon séparée de l'air ambiant, de façon à laisser sortir l'hydrogène libéré en concentration réduite dans l'air ambiant, conjointement avec les produits, en aval, dans le flux de produit de départ (20) restant.
